# EUROPEAN PATENT APPLICATION

(11) **EP 4 734 551 A1**
(43) Date of publication of application: **29.04.2026**
(21) Application number: 25210841.0
(22) Date of filing: 23.10.2025
(51) Int. Cl.: H04R 5/027, H04R 29/00, H04S 7/00

(54) **INSTRUMENT FOR PERFORMING AUDIO TEST ON A LOUDSPEAKER OF A MOTOR VEHICLE AND PROCESS TO TEST THE LOUDSPEAKER USING THE INSTRUMENT**

(30) Priority: 24.10.2024 IT 202400023745
(71) Applicant: FERRARI S.p.A., 41100 Modena (IT)
(72) Inventor: EBRI, Michele, 41100 MODENA (IT); OLIVA, Alfonso, 41100 MODENA (IT); BATTISTI, Luca, 41100 MODENA (IT); PARRAVICINI, Daria, 41100 MODENA (IT); RONCARATI, Giacomo, 41100 MODENA (IT); ROCCHI, Nicholas, 41100 MODENA (IT)
(74) Representative: Studio Torta S.p.A.

(57) **Abstract**

An instrument (12) for performing an audio test on a loudspeaker (11) of a motor vehicle (1) having walls (2) defining an interior passenger compartment (3) with two sitting areas (P) for users of the motor vehicle (1) placed side by side and a pair of sun visors (6) having respective hinge means (7, 8) to be hinged to the walls (2) on at least a first and a second hinge attachment (9, 10) of the walls (2) respectively at said sitting areas (P), the instrument (12) comprising a support device (13) having attachment means (14, 15) configured to be coupled to the first and second hinge attachments (9, 10), so that the support device (13) is carried by said walls (2) within the passenger compartment (3) between said sitting areas (P), one or more microphones (16) carried by the support device (13) at respective fixed positions and configured to pick up sounds emitted by the loudspeaker (11) and generate related signals, and a signal processing unit (18) carried by the support device (13) and configured to at least transmit, externally to the instrument (12), data associated with the signals generated by the microphones (16).

## Description

### CROSS-REFERENCE TO RELATED APPLICATIONS

This patent application claims priority from Italian patent application no. 102024000023745 filed on October 24, 2024, the entire disclosure of which is incorporated herein by reference.

### TECHNICAL FIELD

The invention relates to an instrument for performing an audio test on a loudspeaker of a motor vehicle, in particular at the end of the assembly thereof, namely an end-of-line test, as well as to a process for testing the loudspeaker using the instrument.

### PRIOR ART

Normally, at the end of the assembly of a motor vehicle, an operator performs an audio test on the loudspeakers of the motor vehicle to check for their correct operation.

The test usually includes the emission, through each loudspeaker, of a plurality of predefined sounds with respective constant frequencies and the measurement of the intensity of the emitted predefined sounds by means of a microphone, for example installed by the operator inside the motor vehicle or already present in the motor vehicle for other purposes, such as for example the microphone to detect the voice of the driver and/or of the passengers to provide instructions regarding settings of the motor vehicle or to communicate by telephone with people on the outside of the motor vehicle.

By so doing, the test concludes positively if the intensities measured for each of the constant frequencies are within a predetermined range.

However, this method of performing the test, also called tonal analysis, has considerable drawbacks.

For example, some anomalies that could occur in relation to the intensity of the sounds emitted by the loudspeaker for some frequency ranges cannot be detected, if the constant frequencies lie outside those frequency ranges.

Similarly, effects related to the non-linear behaviour of the loudspeaker cannot be detected.

Therefore, there is a need to perform more articulated tests than tonal analysis in order to guarantee an excellent quality of the sound emissions of the loudspeakers to the customers who buy the motor vehicles.

On the other hand, satisfying the aforementioned need presents some challenges that are not easily overcome.

In particular, the test execution times must be compatible with the needs of vehicle production planning.

In addition, the reliability of more articulated tests would still be limited due to its strong dependence on a precise positioning of the microphone inside the motor vehicle, which is difficult to achieve in a repeatable way by the operator in the context of the assembly line. Furthermore, the type of microphones already present in the motor vehicle is not specifically suitable for the measurement of the response of the loudspeakers, with particular reference to the repeatability of the measurements.

Therefore, an object of the invention is to fulfil the need discussed above, in particular by overcoming the aforementioned challenges, preferably in a simple and repeatable fashion.

### DESCRIPTION OF THE INVENTION

The object is reached by an instrument and by a process as defined in the independent claims.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a rear view of an interior of a motor vehicle,
- figure 2 shows the interior of the motor vehicle of figure 1, wherein an instrument according to the invention is mounted for performing an audio test on a loudspeaker of the motor vehicle,
- figure 3 is a diagram of an embodiment of the instrument, and
- figures 4, 5, are respective diagrams of further embodiments of the instrument.

### EMBODIMENTS OF THE INVENTION

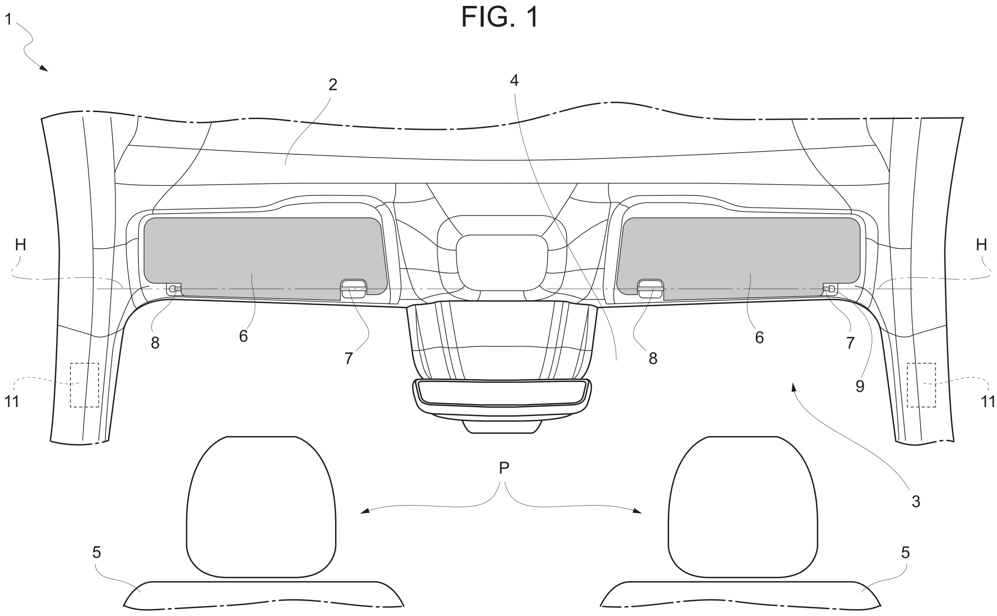

In figure 1, reference number 1 is used to indicate, as a whole, a motor vehicle.

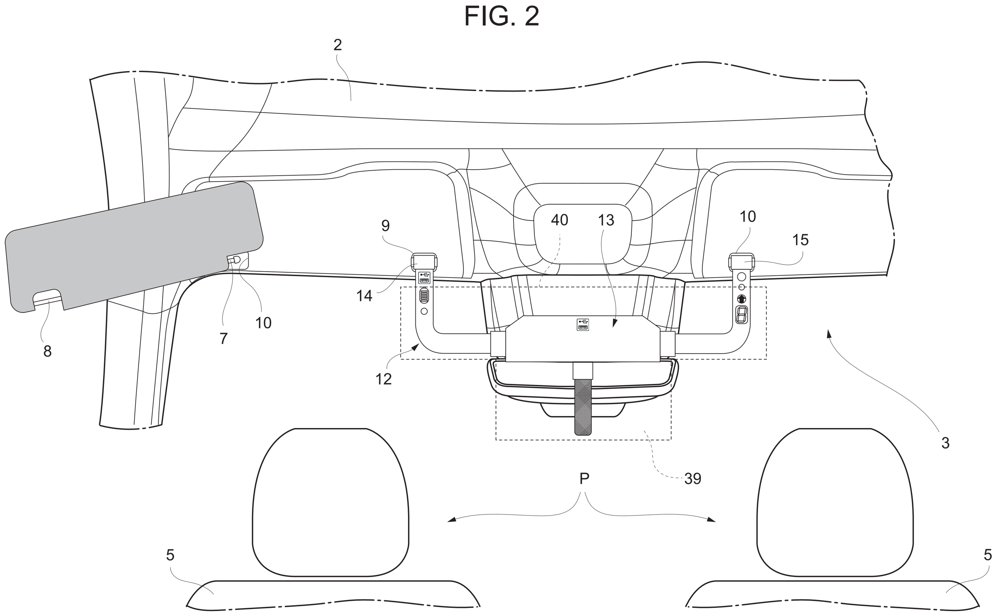

The motor vehicle 1 has a plurality of walls 2 (at least one of them, e.g. a front wall 2, being shown in figure 2) arranged so as to define an interior passenger compartment 3.

For example, in any portion of the text, the front wall 2 could be replaced by "one of the walls 2".

The passenger compartment 3 has at least two sitting areas (or stations or seats) P for users of the motor vehicle 1, in particular a driver and a passenger. For example, in other words, the sitting areas P are a driver's sitting area and a passenger's sitting area, respectively.

The sitting areas P are side by side along a transversal axis of the motor vehicle 1, namely a pitch axis, i.e. a horizontal axis that is orthogonal to a longitudinal or roll axis of the motor vehicle 1.

In the case of a four-door motor vehicle, the sitting areas P are the front ones according to the longitudinal axis.

In other words, the motor vehicle 1 has a windshield 4 and a pair of seats 5 located immediately behind the windshield 4, according to a longitudinal axis, and respectively defining the sitting areas P between the windshield 4 and the seats 5, according to the longitudinal axis.

For example, in other words, the seats 5 are front seats.

For example, therefore, the sitting areas P are respectively defined by the seats 5; for example, the sitting areas P could respectively be replaced by the seats 5 (in any portion of the text).

For example, the seats 5 are side by side along the transversal axis of the motor vehicle 1, namely the pitch axis.

The walls 2 comprise, for example, one of the walls 2 (e.g. which can be referred to, in the text, as front wall 2, for example front wall 2 of the passenger compartment 3), for example (e.g. extending or located) above or immediately above the windshield 4 and/or in front of the seats 5 according to the longitudinal axis and/or between the windshield 4 and the seats 5 according to the longitudinal axis.

Alternatively or in addition, the front wall 2 delimits the passenger compartment 3 at the front and/or extends or is located after or behind the windshield 4 (e.g. starting from the windshield 4) according to the longitudinal axis.

The motor vehicle 1 further comprises one or more loudspeakers 11 (shown in a schematic form), for example arranged according to known configurations and, therefore, not described in detail.

As shown in figure 1, the motor vehicle 1 comprises a pair of sun visors 6 respectively for the two sitting areas P.

The sun visors 6 are hinged or can be hinged to the walls 2 or more precisely to the front wall 2, in particular above the windshield 4, respectively at the two aforementioned sitting areas P.

Alternatively or in addition, the sun visors 6 are hinged or can be hinged between the windshield 4 and the seats 5 according to the longitudinal axis, for example, since the sitting areas P are respectively defined by the seats 5, between the windshield and the seats 5 according to the longitudinal axis.

Alternatively or in addition, the sun visors 6 are hinged or can be hinged to the front wall 2 (which is, for example, above or immediately above the windshield and/or in front of the seats 5 according to the longitudinal axis), for example, since they are hinged or can be hinged above the windshield 4, respectively at the two aforementioned sitting areas P, namely, for example, where the front wall 2 is located.

The sun visors 6 are therefore carried by the walls 2 or, more precisely, by the front wall 2 (or at or on the walls 2 or more precisely at or on the front wall 2) in a rotary manner around respective hinge axes H, the hinge axes H being preferably horizontal and more preferably parallel to the pitch axis.

Each of the sun visors 6 has hinge means or hinge members 7, 8, for example comprising respective pins, configured to be hinged on respective hinge attachments 9, 10, for example comprising respective bushes designed to receive the pins in a relatively rotary manner.

The hinge attachments 9, 10 for hinging the hinge means or hinge members 7, 8 of the corresponding one of the sun visors 6 are located at a corresponding one of the sitting areas P or in front of the corresponding one of the sitting areas P.

In other words, the sun visors 6 have respective hinge means or hinge members 7, 8 (in the specific non-limiting example of figure 2, a first pair of hinge members 7, 8 and a second pair of hinge members 7,8) to be hinged (for example, above the windshield 4) on (for example, respectively) at least a first and a second hinge attachment 9, 10 (or a first pair of hinge attachments 9, 10 and a second pair of hinge attachments 9, 10) of the walls 2 or of the front wall 2 respectively at the sitting areas P. The first and the second hinge attachments 9, 10 (or the first pair of hinge attachments 9, 10 and the second pair of hinge attachments 9, 10) are respectively located at the sitting areas P or respectively in front of the sitting areas P.

In other words, one of the hinge means or hinge members 7, 8 (in figure 2, the hinge member 7) or the hinge means or hinge member 7 of one of the sun visors 6 is configured to hinge said one of the sun visors 6 on the first hinge attachment 9 at a related one of the sitting areas P (the first hinge attachment 9 is located at the related one of the sitting areas P); one of the hinge means or members 7, 8 (in figure 2, the hinge member 8) or the hinge means or hinge member 8 of the other one of the sun visors 6 is configured to hinge said other one of the sun visors 6 on the second hinge attachment 10 at the other one of the sitting areas P (the second hinge attachment 10 is located at the other one of the sitting areas P).

Alternatively or in addition, the hinge members 7, 8 of the related first pair are configured to hinge the related sun visor 6 to the hinge attachments 9, 10 of the related first pair, respectively, at the related sitting area P; the hinge members 7, 8 of the related second pair are configured to hinge the other related sun visor 6 to the hinge attachments 9, 10 of the related second pair, respectively, at the other related sitting area P.

For example, the hinge attachments 9, 10 are or form part of the walls 2 or, more precisely, of the front wall 2 and/or are located on the walls 2 or, more precisely, on the front wall 2.

Alternatively or in addition, in the specific example of figure 2, the walls 2 have or the front wall 2 has two hinge attachments 9, 10, namely a first pair of hinge attachments 9, 10, at (and/or relating to) one of the sitting areas P and two other hinge attachments 9, 10, namely a second pair of hinge attachments 9, 10, at (and/or relating to) the other one of the sitting areas P. Therefore, for example, one of the sun visors 6 has a first pair of hinge members 7, 8 configured to be respectively hinged on the hinge attachments 9, 10 of the related first pair at the related one of the sitting areas P, as well as the other one of the sun visors 6 has a second pair of hinge members 7, 8 configured to be respectively hinged on the hinge attachments 9, 10 of the related second pair at the related one of the sitting areas P.

Alternatively or in addition, the first pair of hinge attachments 9, 10 is located in front of one of the seats 5, just as the second pair of hinge attachments 9, 10 is located in front of the other one of the seats 5.

Alternatively or in addition, the hinge attachments 9, 10 are located in front of the seats 5.

Alternatively or in addition, the hinge attachments 9, 10 are more generally part of the motor vehicle 1 (e.g. instead of being part of the walls 2 or of the front wall 2) and are carried by the walls 2 or by the front wall 2.

Alternatively or in addition, for example, since the sun visors 6 are hinged or can be hinged to the walls 2 or, more precisely, to the front wall 2 above the windshield 4 and respectively at the two aforementioned sitting areas P, the hinge attachments 9, 10 (or the two pairs of hinge attachments 9, 10) are located above or immediately above the windshield 4 and/or in front of the seats 5 according to the longitudinal axis and/or between the windshield 4 and the seats 5 according to the longitudinal axis.

According to other examples, the hinge members 7, 8 could have been or could have included bushes, just as the hinge attachments 9, 10 could have been or could have included pins.

Furthermore, according to some embodiments, even just one of the hinge members 7, 8 could be sufficient to hinge the corresponding sun visor 6 to the walls 2 or more precisely to the front wall 2 through the coupling with the related one of the hinge attachments 9, 10, whereby the other one of the hinge members 7, 8 as well as the related one of the hinge attachments 9, 10 could be absent. For example, in this case (not shown), the sun visors 6 have respective hinge members (i.e., for example, one per sun visor 6) to be respectively hinged on hinge attachments (each one at a related one of the sitting areas P or in front of a related one of the sitting areas P) of the walls 2 or of the front wall 2 respectively at the sitting areas P. In other words, the walls 2 have or the front wall 2 has a hinge attachment at (and/or relating to) one of the sitting areas P and another hinge attachment at (and/or relating to) the other one of the sitting areas P. Herein, for example, the respective hinge members of the sun visors 6 are configured to be respectively hinged to the hinge attachments, in turn respectively at (and/or relating to) the sitting areas P, so that the sun visors 6 are hinged to the walls 2 or to the front wall 2 respectively at the sitting areas P.

The sun visors 6 can be disassembled from the walls 2, in particular by releasing the hinge members 7, 8 from the related hinge attachments 9, 10.

In figure 2, the sun visors 6 are disassembled, specifically partially, as the hinge member 7 of one of the sun visors 6 is released from the related hinge attachment 9 (the innermost one according to the pitch axis), just as the hinge member 8 of the other one of the sun visors 6 is released from the related hinge attachment 10 (the innermost one according to the pitch axis).

Therefore, one of the hinge attachments 9 and one of the hinge attachments 10 (in particular, the most central or inner ones according to the pitch axis) are free for the coupling of other components.

In figure 2, an instrument 12 for performing an audio test on one or more of the loudspeakers 11 is coupled to one of the hinge attachments 9 and to one of the hinge attachments 10 respectively at the two sitting areas P.

Herein, for example, said one of the hinge attachments 9 is at (or relating to) one of the sitting areas P, while said one of the hinge attachments 10 is at (or relating to) the other one of the sitting areas P.

More in detail, the instrument 12 comprises a support device or support 13 having attachment devices 14, 15 configured (in particular, respectively) to be coupled to the hinge attachments 9, 10 (for example, respectively relating to the sitting areas P or at the sitting areas P) respectively at the two sitting areas P. In this way, the instrument 12 is carried by the walls 2 or by the front wall 2 within the passenger compartment 3 between the two sitting areas P, for example, according to the pitch axis.

For example, the attachment devices 14, 15 can be replaced by attachment means (just as, vice versa, the attachment means can be replaced by the attachment devices 14, 15) configured to be coupled to the hinge attachments 9, 10, such that the support 13 is carried by the walls 2 or by the front wall 2 within the passenger compartment 3 between the two sitting areas P, for example according to the pitch axis.

For example, the attachment device 14 is configured to be coupled to one of the hinge attachments 9, 10 (e.g. of the first pair), in particular - but not necessarily - the hinge attachment 9 (e.g. the innermost one according to the pitch axis), to hinge one of the hinge members 7, 8 (in particular, the hinge member 7) of one of the sun visors 6 at one of the sitting areas P (the one on the left in figure 2). The attachment device 15 is configured to be coupled to one of the hinge attachments 9, 10 (e.g. of the second pair), in particular - but not necessarily - the hinge attachment 10 (e.g. the innermost one according to the pitch axis), to hinge one of the hinge members 7, 8 (in particular, the hinge member 8) of the other one of the sun visors 6 at the other one of the sitting areas P (the one on the right in figure 2).

In particular, the attachment devices 14, 15 are configured to hinge the support 13 to the hinge attachments 9, 10 (in the example of figure 2, the innermost ones according to the pitch axis respectively at the two sitting areas P or relating to the two sitting areas P), so that the support 13 can rotate with respect to the walls 2 or to the front wall 2, more precisely around a hinge axis parallel to the axes H.

For example, the attachment devices 14, 15 are configured to hinge the support 13 to the hinge attachments 9, 10 making respectively part of the related first pair and the related second pair.

For example, the attachment devices 14, 15 could comprise bushes, if the hinge attachments 9, 10 comprise pins designed to be coupled to the bushes, or they could comprise pins (as shown herein), if the hinge attachments comprise bushes designed to receive the pins.

According to other examples, the attachment devices 14, 15 could be configured to be coupled to the hinge attachments 9, 10 through interference, so that the support 13 remains fixed with respect to the walls 2 or, more precisely, to the front wall 2.

As shown in figure 2, the sun visors 6 comprise a first sun visor 6 and a second sun visor 6. The first sun visor 6 has first hinge means or hinge members 7, 8 (in particular, two first hinge members 7, 8) to be hinged to the walls 2 or to the front wall 2 on a first hinge attachment 9 and on an optional third hinge attachment 10 (i.e., optionally, a first pair of hinge attachments 9, 10) of the walls 2 or of the front wall 2 at a first sitting area P of the sitting areas P. For example, the first and third hinge attachments 9, 10 are located at the first sitting area P (i.e. they are near or relate or entirely internal to the first sitting area P), for example on the front wall 2 and/or above the windshield 4 and/or in front of a first seat of the seats 5 and/or between a first seat of the seats 5 and the windshield 4 according to the longitudinal axis. For example, the first hinge members 7, 8 are configured to be respectively hinged to the first and to the third hinge attachments 9, 10 to hinge the first sun visor 6 to the walls 2 or to the front wall 2 at the first sitting area P. As mentioned above, for example, the first or the third hinge attachments can be eliminated or absent, as well as one of the first hinge members 7, 8 can be eliminated or absent. The second sun visor 6 has second hinge means or members 7, 8 (in particular, two second hinge members 7, 8) to be hinged to the walls 2 or to the front wall 2 on a fourth (optional) hinge attachment 9 and on a second hinge attachment 10 (i.e., optionally, a second pair of hinge attachments 9, 10) of the walls 2 or of the front wall 2 at a second sitting area P of the sitting areas P. For example, the fourth and the second hinge attachments 9, 10 are located at the second sitting area P, for example on the front wall 2 and/or above the windshield 4 and/or in front of a second seat of the seats 5 and/or between a second seat of the seats 5 and the windshield 4 according to the longitudinal axis. For example, the second hinge members 7, 8 are configured to be respectively hinged to the fourth and to the second hinge attachments 9, 10 to hinge the second sun visor 6 to the walls 2 or to the front wall 2 at the second sitting area P. As mentioned above, for example, the fourth or the second hinge attachments can be eliminated or absent, as well as one of the second hinge members 7, 8 can be eliminated or absent. The support 13 has a first and a second attachment device 14, 15. The attachment device 14 is configured to be coupled to the first hinge attachment 9 or to the third hinge attachment 10, while the attachment device 15 is configured to be coupled to the second hinge attachment 10 or to the fourth hinge attachment 9, such that the support 13 is carried by the walls 2 or by the front wall 2 within the passenger compartment 3 between the first and the second sitting area P, i.e. between the sitting areas P. In other words, the attachment devices 14, 15 are respectively configured to be coupled to the first or to the third hinge attachment and to the second or to the fourth hinge attachment, such that the support 13 is carried by the walls 2 or by the front wall 2 within the passenger compartment 3 between the first and the second sitting area P, i.e. between the sitting areas P.

In addition to the support 13, the instrument 12 comprises one or more microphones 16, which are carried in respective fixed positions by the support 13. The microphones 16 are more precisely fixed or coupled to the support 13, in particular by means of electrical connectors 17, more in particular of the BNC type, fixed to the support 13. This is not, however, strictly limiting, since the electrical connectors 17 could be of a different type, for example XLR, LEMO and the like; furthermore, the microphones 16 could be fixed or coupled to the support 13 indirectly, since they are fixed or coupled to a related acquisition board (not specifically shown herein), which, in turn, is fixed to the support 13. For example, the microphones 16 could comprise MEMS microphones directly attached to or coupled to the acquisition board.

Preferably, the microphones 16 are also secured to the support 13 independently of the coupling to the electrical connectors 17, for example as they are inserted into holes of the support 13 or screwed to the support 13 by means of threaded devices.

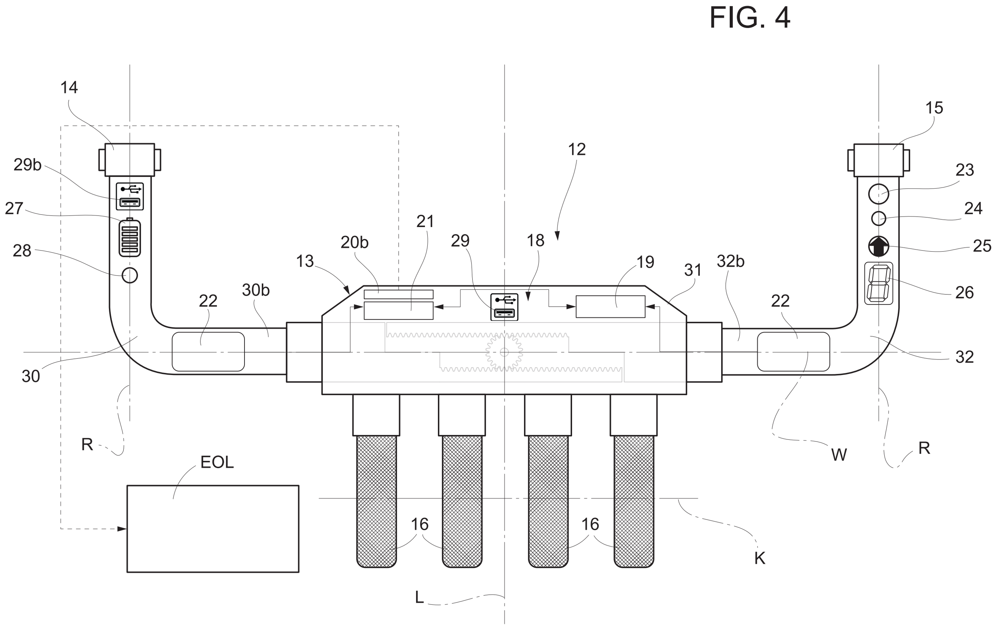

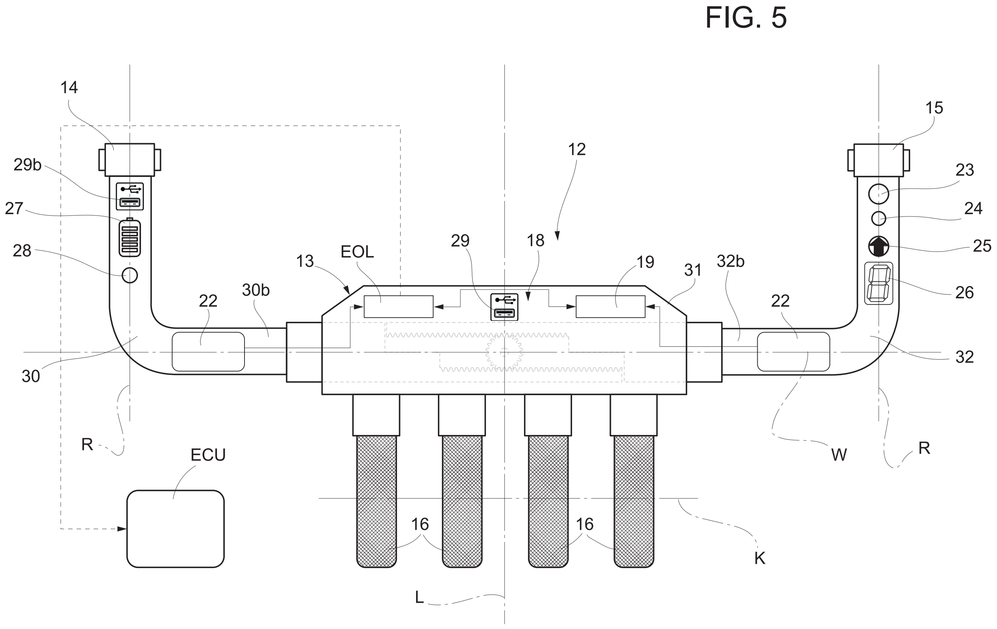

In the embodiments of figures 4, 5, the microphones 16 are preferably aligned with one another along an axis K intended to be parallel to the pitch axis when the support 13 is coupled to the walls 2.

More in particular, the microphones 16 are arranged in succession along the axis K with constant distances between each one of the microphones 16 and the next one according to the axis K.

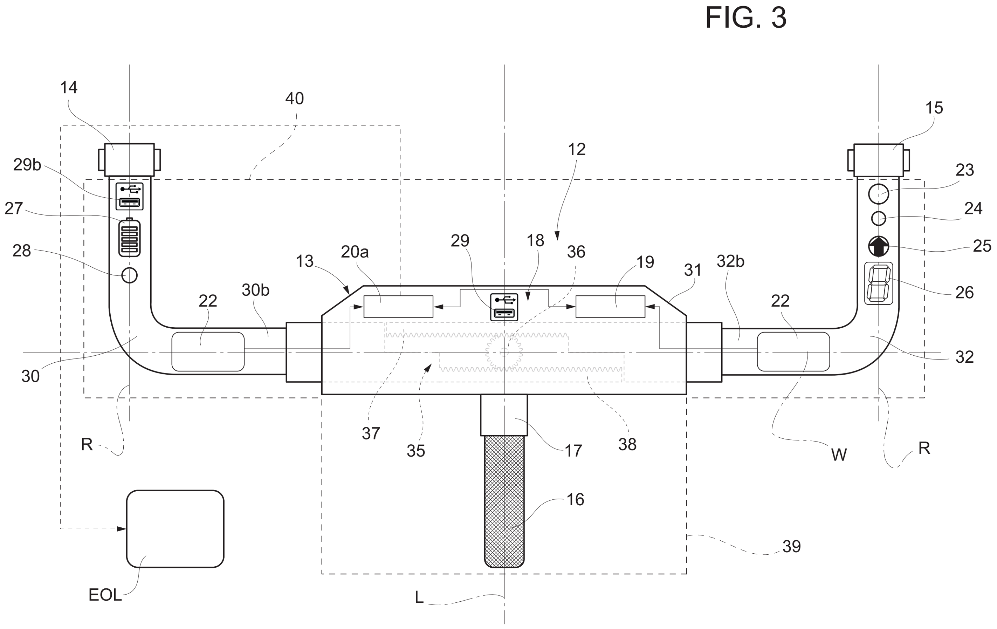

Preferably, as shown in figures 3-5, the support 13 extends along an axis W, in particular parallel to or coinciding with the axis K, in a symmetrical manner with respect to an axis or plane L orthogonal to the axis W.

In the embodiments of figures 4, 5, the microphones 16 are also arranged symmetrically with respect to the plane L.

In the embodiment of figure 3, the instrument 12 has one single microphone 16, in particular located at the plane L, or - in other words - in a central position on the support 13 according to the axis W.

Clearly, the number of microphones 16 can be different in each one of the disclosed embodiments, without lacking generality. In particular, the embodiments of figures 4, 5 can also have one single microphone 16, just as the embodiment of figure 3 can have several microphones 16, to which all or part of the arrangement features described for the embodiments of figures 4, 5 can be applied.

The microphones 16 are configured to pick up sounds emitted by the loudspeakers 11 and to generate related signals, in particular - but not necessarily - microphone-level signals. The microphone-level signals are indicative of the sounds emitted by the loudspeakers 11 and, therefore, carry, in particular, information that makes it possible to trace the emitted sounds or information characteristic of the emitted sounds. In other words, the term "indicative" expresses the possibility of tracing what is indicated in a direct and unequivocal way.

For example, the microphone-level signals are signals (specifically, but not necessarily, voltage signals) in the time domain, in particular analogue signals, indicative of the intensity or pressure of the emitted sounds, in particular as they correspond to the intensity or pressure of the emitted sounds, for example by means of a gain.

More in particular, the microphones 16 are configured to generate signals, in particular microphone-level signals, more in particular indicative of the intensity or pressure of the emitted sounds, with a frequency range between 16Hz and 20000 Hz, namely the range of frequencies audible to human beings.

The instrument 12 further comprises a signal processing unit 18 carried by the support 13 (in particular, fixed to the support 13) and configured to at least transmit, externally to the instrument, data associated with the signals generated by the microphones.

The data, which, in turn, can be signals, is indicative of the emitted sounds, namely it carries information that makes it possible to trace the emitted sounds or information characteristic of the emitted sounds.

Therefore, the data directly depends on the microphone-level signals or is a function thereof.

For example, the data could be the result of a sampling of conditioned signals resulting from a conditioning of the microphone-level signals, or a spectral representation or a representation in the frequency domain of the conditioned signals, possibly downstream of a sampling thereof.

Preferably, the signal processing unit 18 comprises a microphone preamplifier 19 configured to amplify the microphone-level signals, thereby generating or outputting respective line-level signals.

In particular, the line-level signals substantially maintain the same frequencies as the microphone-level signals but with the amplitudes or intensities relatively associated with these frequencies being greater than those of the microphone-level signals. More in particular, the voltage values of the microphone-level signals are increased in the line-level signals according to a gain, for example.

The line-level signals could be output by the microphone preamplifier 19 as digital signals, or alternatively as analogue signals, without lacking generality.

Preferably, the data transmitted by the signal processing unit 18 directly depends on or is a function of the line-level signals, which, in turn, are a function of the microphone-level signals, as previously disclosed.

Therefore, the transmitted data could be defined, for example, by signals that result from a sampling of the line-level signals or it could even coincide with the line-level signals.

For example, in the embodiment of figure 3, the signal processing unit 18 comprises a transmitter 20a configured to transmit the line-level signals or, more generally, the related data externally to the instrument, for example to a processing unit EOL, for example an external one, in particular configured to perform the audio test of the loudspeakers 11 based on the transmitted data, namely, in particular, an analysis of the frequency response of the loudspeakers 11.

In the embodiment of figure 4, in addition to a transmitter 20b, the signal processing unit 18 comprises a memory 21 configured to record data prior to the transmission thereof.

In other words, the signal processing unit 18 is configured to produce the data to be transmitted starting from the signals generated by the microphones 16 and to store the produced data in the memory 21, before it is actually transmitted, specifically by the transmitter 20b.

As a matter of fact, the transmitter 20b is configured to transmit the data stored or recorded by the memory 21 externally to the instrument 12, in particular to the external processing unit EOL.

In the embodiment of figure 5, the processing unit EOL is part of the signal processing unit 18, whereby it is carried by the support 13 of the instrument 12, more particularly it is fixed to the support 13.

In the embodiment of figure 5, the processing unit EOL is configured to communicate or transmit data outside the instrument 12, for example to an external unit ECU, the data being associated with or related to the signals generated by the microphones 16.

The processing unit EOL could be configured to perform various treatments on the microphone-level signals or on the line-level signals or on the data transmitted by the signal processing unit 18, where applicable.

For example, the processing unit EOL could perform a sampling of the line-level signals or of the microphone-level signals, if they are analogue, or it could determine a spectral representation of the line-level signals or of the microphone-level signals.

The processing unit EOL is more generally configured to extract, from the data transmitted by the signal processing unit 18, from the line-level signals or from the microphone-level signals, information indicative of or characteristics of the sounds emitted by the loudspeakers 11.

Furthermore, the processing unit EOL is configured to perform the audio test by comparing the extracted information with respective reference specifications and by verifying that the extracted information meets predetermined relationships with the reference specifications, which represent acceptable quality conditions for the sounds emitted by the loudspeakers 11.

The test is passed if the pre-established relationships are met; vice versa, the test is not passed, so that it will be necessary to intervene on the loudspeakers 11, for example to replace them, or on the structures of the motor vehicle 1 that carry or house the loudspeakers 11.

For example, the extracted information comprises or is defined by parameters characteristic of the emitted sounds. In particular, the characteristic parameters could be the intensities or amplitudes associated with the relative frequencies of the spectral representation of the line-level signals or of the microphone-level signals.

In this case, for example, the pre-established relationships that must be met in order to pass the test consist in the presence of the values of the characteristic parameters (the intensities or amplitudes) within predefined ranges, in particular for each one of the frequencies.

In the embodiment of figure 5, for example, the test could be performed by the processing unit EOL directly on board the instrument 12 by extracting the information from the line-level signals or from the microphone-level signals. In this case, the data transmitted externally to the instrument could be defined, for example, by the test results or by the information extracted by the processing unit EOL, so that the test can instead, or in addition, be performed by the external unit 21.

Preferably, the microphones 16 and the signal processing unit 18 (in particular, one or more of the components thereof) are electrically powered by one or more electrical energy storage devices 22 of the instrument 12, for example batteries or capacitive devices, carried by the instrument 12 and, more in particular, fixed to the instrument 12.

Conveniently, the instrument 12 comprises a calibration unit 23 carried by the support 13 and, more precisely, fixed to the support 13.

The calibration unit 23 is configured to execute a sequence of calibration instructions to calibrate one or more of the microphones 16 in response to operation of a calibration command 24 on the support 13.

The calibration command 24 is part of the instrument 12 and can specifically be manipulated by an operator. In particular, the calibration command 24 is movable with respect to the support 13, at least between a neutral position (in which the calibration command 24 is inert) and an activation position, in which the calibration unit 23 executes the sequence of calibration instructions. For example, the calibration command 24 could be a button. The calibration command 24 is therefore operated when it is brought to the activation position.

The instrument 12 can further comprise a selector command 25 configured to permit selection of the microphone 16 or microphones 16 to be calibrated by the calibration unit 23 in response to operation of the calibration command 24. Basically, by operating the calibration command 24, the calibration unit 23 executes the calibration instructions on the selected microphone 16 or on the selected microphones 16 by means of the selector command 25.

The execution of the sequence of calibration instructions entails that the microphone 16 picks up a predefined calibration sound, for example emitted through one of the loudspeakers 11, and the calibration unit 23 compares the picked-up sound (namely, the characteristic parameters thereof extracted by the calibration unit 23 from the microphone-level signals relating to the picked-up sound) with a stored reference and tunes the microphone 16 until a difference between the picked-up sound and the reference falls within a predetermined tolerance.

Preferably, the instrument 12 comprises an indicator 26 on the support 13 to signal the microphone 16 or microphones 16 selected by the selector command 25 to the operator.

Alternatively or in addition, the instrument 12 can comprise one or more further indicators on the support 13, for example an indicator 27 for signalling to the operator an electrical charge level of the storage devices 22 or an indicator 28 for signalling an operating state of one or more microphones 16 (e.g. faulty, operating, in abnormal conditions and the like).

Preferably, the instrument 12 can comprise one or more connectors, in particular of the USB type, for the connection of peripheral devices, for example a connector 29 for the transfer of the data produced by the processing unit EOL in the embodiment of figure 5, or a connector 29b connected to the storage devices 22 for the electrical recharging of the storage devices 22.

When dealing with the support 13 in greater detail, the latter comprises at least two portions 30, 31 relatively movable relative to each other to adjust a relative distance (in particular along the axis W) between the attachment devices 14, 15.

The portion 30 carries (specifically, in a fixed manner with respect thereto) the attachment device 14 and is coupled to the portion 31 in a relatively movable manner (in particular, in a translating manner) along a straight axis, specifically coinciding with the axis W.

More in particular, the support 13 comprises a further portion 32, which carries (in particular, in a fixed manner with respect thereto) the attachment device 15 and is coupled to the portion 31 in a relatively movable manner (in particular, in a translating manner) along the straight axis (specifically, the axis W).

Hence, the portion 31 defines an intermediate portion of the support 13 between the portions 30, 32 according to the straight axis (specifically, the axis W). In other words, the portion 31 is located between the portions 30, 32 according to the straight axis.

In detail, the portions 30, 32 comprise respective arms having respective ends 30b, 32b coupled to the portion 31 in a translating manner along the straight axis (specifically, the axis W) with respect to the portion 31 and respective opposite ends defined by the attachment devices 14, 15.

The arms have respective first segments comprising the ends 30b, 32b, respectively, and extending along the same straight axis (herein, the axis W), namely aligned along the straight axis (like in figures 3-5). In addition, the arms have respective second segments comprising the attachment devices 14, 15, respectively, and extending along respective axes R orthogonal to the straight axis (herein, the axis W), more in particular such that the attachment devices 14, 15 are equally spaced apart from the straight axis according to the related axes R.

Preferably, the portion 31 is centred with respect to the portions 30, 32, according to the straight axis (herein, the axis W).

In particular, the instrument 12 comprises a mechanism 35, which can be operated to impart equal and opposite translations along the straight axis to the portions 30, 32, respectively, with respect to the portion 31.

Specifically, the mechanism 35 comprises a sprocket 36 and two racks 37, 38, respectively fixed with respect to the portions 30, 32 and both engaging with the sprocket 36 at diametrically opposite points of the sprocket 36 and guided on the support 13 in a translating manner along respective axes parallel to the straight axis (herein, the axis W). More in detail, the sprocket 36 is carried by the support 13 in a rotary manner around an axis orthogonal to the straight axis.

The mechanism 35 can be operated to cause the rotation of the sprocket 36, for example manually by means of a fixed knob (not shown) coaxial to the sprocket 36, as well as carried by the support 13 in a rotary manner, or by means of an actuator (not shown), for example an electrically powered actuator.

Preferably, the support 13 has a core, for example made of plastic, and one or more coatings 39, 40, which cover respective portions of the core. For example, the coating 39 covers the microphones 16 and preferably comprises a sound-transparent foam. In particular, the coating 40 comprises a foam for the absorption of energy or for protection against impacts and specifically covers the remaining part of the support 13 left uncovered by the coating 39, while leaving the attachment devices 14, 15 free for attachment to the hinge attachments 9, 10.

The following is a description of a process for testing one or more of the loudspeakers 11 using the instrument 12.

The method comprises the steps of coupling or attaching the attachment devices 14, 15 to the respective hinge attachments 9, 10 to place the support 13 in the passenger compartment 3 between the two sitting areas P, in particular for the driver and the passenger, namely to specifically hinge the support 13 to the walls 2 or, more precisely, to the front wall 2; emitting sounds through the speaker 11; picking up the emitted sounds and generating related signals, specifically microphone-level signals, through the microphones 16; and transmitting to the outside of the instrument 12 data associated with the signals generated by the microphones 16, in particular through the signal processing unit 18.

The execution of the test of the loudspeaker 11 can be completed by the processing unit EOL, for example based on the data transmitted by the signal processing unit 18, if the unit EOL is external, in the ways already described above. Alternatively, the transmitted data can also possibly be produced by the processing unit EOL, when the latter is carried by the support 13, for example as test results or outcomes, again according, for example, to what has already been described above.

Preferably, the sounds emitted with the loudspeaker 11 sweep the entire working frequency spectrum of the loudspeaker 11 or a frequency range defined in the range of frequencies audible to human beings, in particular between 16 Hz and 20000 Hz. In this way, the spectral representation of the line-level signals or of the microphone-level signals is much richer and makes it possible to determine all types of possible abnormal phenomena, such as high-frequency noise phenomena or sound distortion phenomena.

In other words, sounds having all the frequencies of a continuous or substantially continuous frequency range, in particular between 16 Hz and 20000 Hz or in the range of frequencies audible to human beings, more in particular according to or in response to a command signal of the loudspeaker 11 of the "chirp" or "exponential sine sweep" type, are emitted through the loudspeaker 11.

Owing to the above, the advantages of the instrument 12 and the process according to the invention are evident.

The instrument 12 permits a correct positioning of the microphones 16 within the passenger compartment 3 in a repeatable way, so that accurate audio tests can be performed with precision and reliability.

The presence of several microphones 16 is advantageous since the microphone-level signals generated by them and/or the line-level signals output by the microphone preamplifier 19 and/or the associated data can be averaged or aggregated with each other (for example, by means of an arithmetic average or other aggregation functions), for example by the processing unit EOL. In this way, the execution of the test takes into account, in an aggregated or averaged way, information associated with several points in the space, so that the impact of any phenomena specifically located in a small space is, for example, minimized.

The mobility of the portions 30, 32 with respect to the portion 31 allows for an adaptation of the instrument 12 to different vehicles.

Furthermore, the memory 21 ensures a correct transmission of the collected data as it provides a buffer in case of delays in the transmission of the data.

Finally, the instrument 12 and the process according to the invention can be subjected to changes and variants, which, though, do not go beyond the scope of protection set forth in the appended claims.

In particular, the number and shape of each one the components described and shown herein could be different.

Furthermore, the various embodiments can be combined with one another without any limitations, with particular reference to the various features individually described in the different paragraphs of the description. Each one of these features is independently applicable to each one of the disclosed embodiments.

## Claims

1. An instrument (12) for performing an audio test on a loudspeaker (11) of a motor vehicle (1) having
- walls (2) defining an interior passenger compartment (3) with two sitting areas (P) for users of the motor vehicle (1) placed side by side and
- a pair of sun visors (6) having respective hinge means (7, 8) to be hinged to the walls (2) on at least a first and a second hinge attachment (9, 10) of the walls (2) respectively at said sitting areas (P),
the instrument (12) comprising
- a support device (13) having attachment means (14, 15) configured to couple to the first and second hinge attachments (9, 10), such that the support device (13) is carried by said walls (2) within the passenger compartment (3) between said sitting areas (P),
- one or more microphones (16) carried by the support device (13) at respective fixed positions and configured to pick up sounds emitted by the loudspeaker (11) and generate related signals, and
- a signal processing unit (18) carried by the support device (13) and configured to at least transmit, externally to the instrument (12), data associated with the signals generated by the microphones (16).

2. The instrument according to claim 1, wherein the signal processing unit (18) comprises a microphone preamplifier (19) configured to amplify said signals, consisting of microphone-level signals, thereby generating respective line-level signals, the data transmitted by the signal processing unit (18) being a function of the line-level signals.

3. The instrument according to claim 1 or 2, wherein the signal processing unit (18) comprises a memory (21) and is configured to record data prior to transmission thereof.

4. The instrument according to any one of the preceding claims, further comprising a calibration unit (23) carried by the support device (13) and configured to execute a sequence of calibration instructions to calibrate one or more of the microphones (16) in response to operation of a calibration command (24) on the support device (13).

5. The instrument according to any one of the preceding claims, wherein the attachment means (14, 15) comprise a first and a second attachment device (14, 15) respectively configured to couple to the first and the second hinge attachments (9, 10), the support device (13) comprising portions (30, 31, 32) relatively movable relative to each other to adjust a relative distance between the first and the second attachment devices (14, 15).

6. The instrument according to claim 5, wherein said portions (30, 31, 32) comprise at least a first portion (30) carrying one among the first and second attachment devices (14, 15), and a second portion (31) coupled to the first portion (30) in a relatively movable manner along a straight axis (W) relative to the first portion (30).

7. The instrument according to claim 6, wherein said portions (30, 31, 32) further comprise a third portion (32) carrying the other among said first and second attachment devices (14, 15) and coupled to said second portion (32) in a movable manner along said straight axis (W) relative to the second portion (31), the second portion (31) being arranged between said first and third portions (30, 32) according to said straight axis (W).

8. The instrument according to claim 7, further comprising a mechanism (35) operable to impart equal and opposite translations along said rectilinear axis (W) to the first and third portions (30, 32), respectively, relative to the second portion (31).

9. The instrument according to any one of the preceding claims, wherein the attachment means (14, 15) comprise or are a first and a second attachment device (14, 15) respectively configured to be coupled to the first and the second hinge attachments (9, 10), such that the support device (13) is carried by the walls (2) within the passenger compartment (3) between said sitting areas (P).

10. The instrument according to claim 9, wherein the sun visors (6) have respective hinge means (7, 8) to be hinged to the walls or to one of the walls (2) above the windshield (4) respectively at said sitting areas (P), the first and second hinge attachments being part of the walls (2) or said one of the walls (2) respectively at said sitting areas (P).

11. The instrument according to any one of the preceding claims, wherein the motor vehicle (1) has
- a windshield (4),
- a pair of seats (5) located immediately behind the windshield (4) according to a longitudinal axis of the motor vehicle (1) and respectively defining the sitting areas (P) between the windshield (4) and the seats (5) according to the longitudinal axis.

12. The instrument according to claim 11, wherein said one of the walls (2) is a front wall.

13. The instrument according to claim 11 or 12, wherein said one of the walls (2) is in front of the seats (5).

14. The instrument according to any one of the preceding claims, wherein the sun visors (6) comprise a first sun visor (6) and a second sun visor (6), wherein the hinge means (7, 8) comprise first hinge means (7, 8) of the first sun visor (6) and second hinge means (7, 8) of the second sun visor (6), the first sun visor (6) having first hinge means (7, 8) to be hinged to the walls (2) or to said one of the walls (2) on the first hinge attachment (9) and optionally on a third hinge attachment (10) of the walls (2) or of said one of the walls (2) at a first sitting area (P) of said sitting areas (P), the second sun visor (6) having the second hinge means (7, 8) to be hinged to the walls (2) or to said one of the walls (2) on the second hinge attachment (10) and optionally on a fourth hinge attachment (9) of the walls (2) or of said one of the walls (2) at a second sitting area (P) of said sitting areas (P), wherein the attachment means comprise a first and a second attachment device (14, 15) respectively configured to be coupled to the first and the second hinge attachments (9, 10), such that the support device (13) is carried by the walls (2) or by said one of the walls (2) within the passenger compartment (3) between the first sitting area (P) and the second sitting area (P).

15. Process for testing a loudspeaker (11) of a motor vehicle (1) having walls (2) defining an interior passenger compartment (3) with two sitting areas (P) for users of the motor vehicle (1) placed side by side and a pair of sun visors (6) having respective hinge means (7, 8) to be hinged to the walls (2) on at least a first and a second hinge attachment (9, 10) of the walls (2) respectively at said sitting areas (P), the process comprising the use of the instrument (12) according to any one of the preceding claims and the steps of
- coupling the attachment means (14, 15) of the support device (13) of the instrument (12) to the first and second hinge attachments (9, 10) to position the support device (13) inside the passenger compartment (3) between said sitting areas (P),
- emitting sounds through the loudspeaker (11),
- picking up the emitted sounds and generate related signals through the one or more microphones (16) of the instrument (12), and
- transmitting to the external of the instrument (12) data associated with the signals generated by the microphones (16).

16. The process according to claim 15, wherein the emitted sounds sweep the entire working frequency spectrum of the loudspeaker (11) or a frequency range in a range of frequencies audible to human beings, particularly between 16 Hz and 20000 Hz.
